(19) Europäisches Patentamt
European Patent Office
Office européen des brevets

(11) Veröffentlichungsnummer: **0 440 019 B1**

# (12) EUROPÄISCHE PATENTSCHRIFT

(45) Veröffentlichungstag der Patentschrift: **23.11.94**

(51) Int. Cl.[5]: **C08J 9/00**, C08L 75/04, C08L 75/02, //(C08L75/04, 83:12),(C08L75/02,83:12)

(21) Anmeldenummer: **91100139.4**

(22) Anmeldetag: **04.01.91**

## (54) Verfahren zur Herstellung von zellularen Polyurethan- und/oder Polyharnstofformkörpern nach dem RIM-Verfahren.

(30) Priorität: **17.01.90 DE 4001156**

(43) Veröffentlichungstag der Anmeldung: **07.08.91 Patentblatt 91/32**

(45) Bekanntmachung des Hinweises auf die Patenterteilung: **23.11.94 Patentblatt 94/47**

(84) Benannte Vertragsstaaten: **BE DE FR GB IT NL**

(56) Entgegenhaltungen:
**EP-A- 0 122 743**
**DE-A- 3 406 188**

(73) Patentinhaber: **Th. Goldschmidt AG**
**Goldschmidtstrasse 100**
**D-45127 Essen (DE)**

(72) Erfinder: **Lammerting, Helmut**
**Schweerstrasse 12**
**W-5812 Herbede (DE)**
Erfinder: **Burkhart, Georg, Dr.**
**Barkhovenallee 31**
**W-4300 Essen 16 (DE)**

EP 0 440 019 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von zellularen Polyurethan- und/oder Polyharnstofformkörpern nach dem RIM-Verfahren durch Umsetzung einer flüssigen Polyisocyanate enthaltenden Komponente mit einer Polyole und/oder Polyamine enthaltenden Komponente, welche reaktive Zusatzmittel, wie Kettenverlängerungs-, Vernetzungsmittel und/oder Wasser, und nichtreaktive Zusatzmittel, wie Katalysatoren, grenzflächenaktive Substanzen, Treibmittel, Füllstoffe und/oder weitere Additive enthalten kann.

Bei der Herstellung zellularer Polyurethan- oder Polyharnstofformkörper nach dem RIM-Verfahren ist es bekannt, die Zellstruktur durch Zugabe eines physikalischen Treibmittels, wie eines Fluorkohlenwasserstoffes, zur Polyolkomponente zu erzeugen. Die Verwendung von Fluorkohlenwasserstoffen sollte jedoch aus den bekannten Gründen des Umweltschutzes möglichst eingeschränkt werden.

Eine andere Möglichkeit der Ausbildung eines zellularen Formkörpers besteht im Zusatz von Wasser zur Polyolkomponente, welches bei der Reaktion mit dem Isocyanat Kohlendioxid entwickelt. Hierbei wird jedoch die Bildung offener und poröser Oberflächen der hergestellten Formteile beobachtet.

Eine weitere Möglichkeit zur Ausbildung zellularer Strukturen besteht darin, in die Polyolkomponente vor der Zuführung zum Mischkopf Luft einzurühren oder einzuschlagen. Dabei ist es im allgemeinen möglich, in die Polyolkomponente etwa 20 bis 40 Vol.-% Luft einzuarbeiten. Durch Zugabe von grenzflächenaktiven Substanzen ist es möglich, diese Luftmenge auf etwa 50 bis 70 Vol.-%, bezogen auf Polyol, zu erhöhen. Beispiele von geeigneten grenzflächenaktiven Substanzen sind anionaktive Tenside, wie zum Beispiel die Alkali- oder Ammoniumsalze von Fettsäuren oder Alkylarylsulfonsäuren und nichtionische Tenside, wie die Polyoxyethylenether von Fettalkoholen, die Polyoxyethylenester von Fettsäuren oder partiellen Fettsäureglycerinestern, die Adipin- und Fettsäureester von Pentaerythrit oder in dem Polyol lösliche Polyoxyalkylen-Polysiloxan-Blockmischpolymerisate.

Es wurde nun gefunden, daß überraschenderweise bestimmte Organopolysiloxane die Luftaufnahmefähigkeit der Polyolkomponente über das bisher erreichbare Maß erhöhen können.

Gegenstand der Erfindung ist deshalb ein Verfahren zur Herstellung von zellularen Polyurethan- und/oder Polyharnstofformkörpern nach dem RIM-Verfahren durch Umsetzung einer flüssigen Polyisocyanate enthaltenden Komponente mit einer Polyole und/oder Polyamine enthaltenden Komponente, welche reaktive Zusatzmittel, wie Kettenverlängerungs-, Vernetzungsmittel und/oder Wasser, und nichtreaktive Zusatzmittel, wie Katalysatoren, grenzflächenaktive Substanzen, Treibmittel, Füllstoffe und/oder weitere Additive enthalten kann, mit dem Kennzeichen, daß man als grenzflächenaktive Substanzen Organopolysiloxane der allgemeinen durchschnittlichen Formel

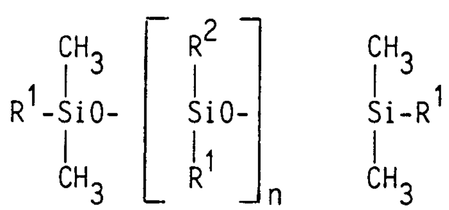

I

wobei

$R^1$ gleich oder verschieden sein kann und ein gegebenenfalls halogensubstituierter Alkylrest, ein Aryl-, Alkylaryl- oder ein Polyetherrest der allgemeinen durchschnittlichen Formel

$$-(CH_2)_3O-(C_2H_4O-)_a(C_3H_6O-)_bR^3$$

ist, wobei a einen durchschnittlichen Wert von 0 bis 15, b einen durchschnittlichen Wert von 1 bis 15 hat, und $R^3$ ein Wasserstoffrest oder ein Alkylrest mit 1 bis 4 Kohlenstoffatomen ist, mit der Maßgabe, daß mindestens n-1 Reste $R^1$ Methylreste sind,

$R^2$ ein Methyl- oder Trimethylsiloxyrest ist und

n, wenn $R^2$ ein Methylrest ist, einen Wert von 3 bis 8, wenn $R^2$ ein Trimethylsiloxyrest ist, einen Wert von 1 bis 4 hat,

mit der Maßgabe, daß das Polymerengemisch der Organosiloxane im wesentlichen frei von Siloxanen ist, bei denen die Werte von n über- oder unterschritten werden.

Organopolysiloxane, welche außerhalb des erfindungsgemäß definierten Bereiches von n liegen, tragen zum erfindungsgemäßen Effekt nichts bei oder reduzieren sogar die Luftaufnahmefähigkeit. Durch die

Bedingung, daß das Polymerengemisch der Organosiloxane

für den Fall, daß $R^2$ ein Methylrest ist, im wesentlichen frei von Siloxanen ist, bei denen $n < 3$ und $> 8$ ist, bzw.

für den Fall, daß $R^2$ ein Trimethylsiloxyrest ist, im wesentlichen frei von Siloxanen ist, bei denen $n < 1$ und $> 4$ ist,

kommt zum Ausdruck, daß die zu verwendenden Organopolysiloxane keine der statistischen Verteilung entsprechende Polymerenverteilung aufweisen und sich somit nicht in äquilibriertem Zustand befinden. Es handelt sich vielmehr um solche Organopolysiloxane, bei denen man die Anteile abgetrennt hat, die außerhalb des Bereiches für n liegen.

In der allgemeinen Formel I können die Reste $R^1$ gleich oder verschieden sein und die folgenden Bedeutungen haben:

$R^1$ kann ein Alkylrest sein, der gegebenenfalls halogeniert ist. Beispiele für solche Alkylreste sind der Methyl-, Ethyl-, Propyl-, iso-Propyl-, Hexyl-, Octyl- oder Dodecylrest. Bevorzugt sind Alkylreste mit 1 bis 4 Kohlenstoffatomen, besonders bevorzugt ist der Methylrest. Als Beispiel eines halogenierten Alkylrestes ist der Chlormethylrest zu nennen.

$R^1$ kann ferner ein Arylrest sein und ist dann vorzugsweise der Phenylrest. Hat $R^1$ die Bedeutung eines Alkylarylrestes, ist der Isopropylphenylrest bevorzugt.

$R^1$ kann auch die Bedeutung eines Polyetherrestes haben. Dieser Polyetherrest entspricht der allgemeinen Formel

$$-(CH_2)_3O-(C_2H_4O-)_a(C_3H_6O-)_bR^3 \quad \text{II}$$

Wie aus der Formel ersichtlich ist, ist der Polyetherrest mit dem Siloxanmolekül durch eine SiC-Bindung verknüpft. a hat einen durchschnittlichen Wert von 0 bis 15; b hat einen durchschnittlichen Wert von 1 bis 15. Vorzugsweise hat a einen Wert von 0 bis 4, b einen durchschnittlichen Wert von 2 bis 8.

$R^3$ ist ein Wasserstoff- oder Alkylrest mit 1 bis 4 Kohlenstoffatomen, vorzugsweise ein Wasserstoff- oder Methylrest.

Für die Reste $R^1$ muß die Bedingung erfüllt sein, daß mindestens n-1 Reste $R^1$ Methylreste sind.

Der Rest $R^2$ ist ein Methyl- oder Trimethylsiloxyrest. Durch die jeweilige Bedeutung von $R^2$ wird der Zahlenwert des Index n festgelegt. Dabei ist es verständlich, daß der Wert von n durch die zusätzliche Anwesenheit eines oder mehrerer Trimethylsiloxyreste ein niedrigerer Wert von n gilt:

Im Falle $R^2$ = Methylrest ist n 3 bis 8,

im Falle $R^2$ = Trimethylsiloxyrest ist n = 1 bis 4, vorzugsweise 1 bis 2.

Es ist Stand der Technik, bei der Herstellung von PU-Formteilen nach dem RIM-Verfahren organisch modifizierte Siloxane einzusetzen. So wurden beispielsweise Polysiloxanpolyethercopolymere als interne Trennmittel verwendet, um die Entformung zu erleichtern. Derartige Polyethersiloxane sind u. a. in der EP-A2-0 122 743 beschrieben. Diese Polyethersiloxane basieren jedoch auf höhermolekularen äquilibrierten Siloxanen, deren Polymerenverteilung im wesentlichen der statistischen Verteilung entspricht. Im Gegensatz dazu handelt es sich bei den beim erfindungsgemäßen Verfahren verwendeten Siloxanen um Siloxanfraktionen, d. h. destillativ aufgearbeitete Produkte. Der Index n ist deshalb als Absolutwert, nicht als Durchschnittswert zu verstehen.

Die beim erfindungsgemäßen Verfahren eingesetzten Siloxane können auch mit anderen nichtionischen Verbindungen kombiniert werden.

Beispiele von beim erfindungsgemäßen Verfahren zu verwendenden Polysiloxanen der Formel I sind

(1)

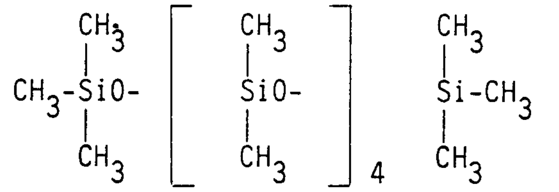

(2)

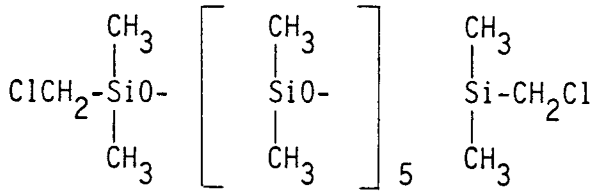

(3)

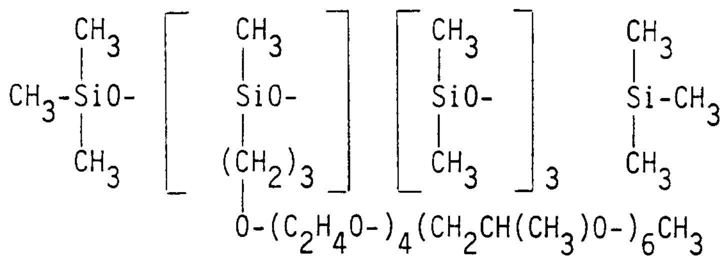

(4)

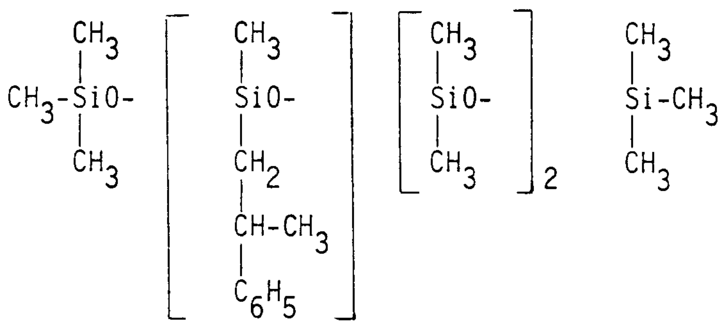

(5)

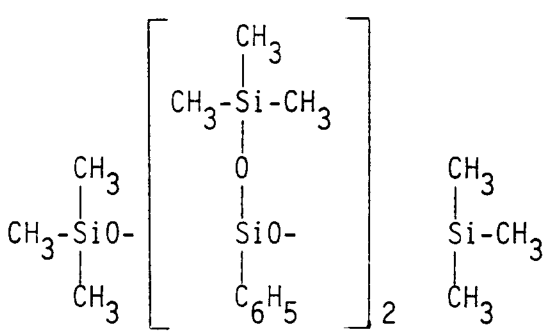

Das erfindungsgemäße Verfahren kann mit den üblichen Polyolen, Polyisocyanaten und reaktiven, sowie nichtreaktiven Zusatzmitteln durchgeführt werden. Diese sind dem Fachmann geläufig. Geeignete Polyole, Polyisocyanate und Zusatzmittel können der Literatur entnommen werden. Es wird auf das Buch "Introduction to Reaction Injection Molding" von F. Melvin Sweeny, Technomic Publishing Co., Westport,

USA, ISBN #087762-271-X, sowie die EP-A2-0 122 743 und EP-A1-0 173 888 verwiesen.

Durch das erfindungsgemäße Verfahren ist es möglich, eine gewisse Menge Luft in die Polyolkomponente einzudispergieren, die einerseits dazu dienen kann, einen Gegendruck in der Form zu erzeugen, um die Oberflächenbeschaffenheit der Formteile zu verbessern, und andererseits den als physikalisches Treibmittel verwendeten Fluorkohlenwasserstoff oder das als reaktives Treibmittel verwendete Wasser ganz oder teilweise durch die erfindungsgemäß zu verwendenden Organopolysiloxane der Formel I zu ersetzen, wobei die physikalischen Eigenschaften der Polyurethanformkörper nicht beeinträchtigt werden. Eine höhere Luftbeladung ermöglicht auch ein besseres Fließen des Reaktionsgutes. Der Effekt der Luftbeladung wird anhand der folgenden Beispiele noch weiter verdeutlicht.

In der Praxis erfolgt die Messung der Luftmenge in der Regel direkt an einer Meßstation an einer RIM-Anlage volumetrisch über eine Dichtemessung. Zur Überprüfung der erfindungsgemäß zu verwendenden Substanzen wird ein Simulationstest verwendet, der eine Aussage über die einzudispergierende Luftmenge zuläßt. Die bei diesem Test einrührbare Luftmenge ist jedoch in diesem Test um den Faktor 2 - 3 geringer als dies in einer Beladestation an einer RIM-Anlage erreichbar ist. Dies ist bei der Bewertung der Ergebnisse zu berücksichtigen.

Der Test wird folgendermaßen durchgeführt:

88 Gew.-Teile eines Polyethertriols, hergestellt durch Anlagerung von Ethylenoxid und Propylenoxid an Glycerin, bzw. Trimethylolpropan, mit einem Molekulargewicht von etwa 4800, einem Gehalt von ca. 16 Gew.-% Oxyethylen-Einheiten, wobei 50 bis 70 % der endständigen OH-Gruppen primäre OH-Gruppen sind,

28 Gew.-Teile Ethylenglykol,

0,35 Gew.-Teile Triethylendiamin,

0,02 Gew.-Teile Dibutylzinndilaurat werden mit

x Gew.-Teilen der erfindungsgemäß zu verwendenden Substanzen, bzw. der Vergleichssubstanzen vermischt.

Das Gemisch wird 4 Minuten lang bei 3200 Umdrehungen intensiv gerührt. Es wird dabei möglichst viel Luft eingeschlagen. Danach werden 70 g des Polyol-Schaumes in einem Standzylinder abgewogen. Es wird unmittelbar nach dem Einfüllen der Substanz die Füllhöhe dieses Polyol-Schaumes gemessen. In der Tabelle sind die erhaltenen Meßwerte angegeben.

| Prüfsubstanz | Teile je 100 Teile Polyol | Volumen in ml |
|---|---|---|
| Blindversuch ohne Zusatz | - | 76 |
| $(CH_3)_3SiO-(SiO(CH_3)_2-)_nSi(CH_3)_3$ | | |
| n = 3 erfindungsgemäß | 0,3 | 90 |
| n = 4 " | 0,3 | 99 |
| n = 5 " | 0,3 | 100 |
| n = 6 " | 0,3 | 100 |
| n = 7 " | 0,3 | 98 |
| n = 8 " | 0,3 | 89 |
| n = 9 nicht erfindungsgemäß | 0,3 | 87 |
| n = 10 " " | 0,3 | 87 |
| n = 11 " " | 0,3 | 87 |
| erfindungsgemäß | | |
| $(CH_3)_3SiO-\left[\begin{array}{c} C_6H_5 \\ \vert \\ SiO- \\ \vert \\ OSi(CH_3)_3 \end{array}\right]_n Si(CH_3)_3$ | | |
| n = 1 | 0,3 | 95 |
| n = 2 | 0,3 | 100 |

| Prüfsubstanz | Teile je 100 Teile Polyol | Volumen in ml |
|---|---|---|
| erfindungsgemäß | | |
| $(CH_3)_3SiO-(SiOCH_3R)_2(SiO(CH_3)_2)_3Si(CH_3)_3$ | | |
| R = $-(CH_2)_3O-(C_2H_4O-)_2(CH_2CH(CH_3)O-)_{10}H$ | 0,3 | 88 |
| R = - $CH_2CH-C_6H_5$<br>          \|<br>        $CH_3$ | 0,3 | 93 |
| R = $-CH_2Cl$ | 0,3 | 88 |
| nicht erfindungsgemäß | | |
| Polyoxyethylenether des Tridecylalkohols mit 12 EO-Einheiten | 0,3<br>1,0 | 80<br>81 |
| Äquilibriertes Polyoxyalkylen-Polysiloxan-Blockmischpolymerisat | 0,3 | 82 |

Die Meßwerte zeigen, daß die beim erfindungsgemäßen Verfahren zu verwendenden Organopolysiloxane der Formel I eine wesentlich höhere Luftbeladung ermöglichen, als dies bei vergleichbaren Produkten des Standes der Technik der Fall ist.

## Patentansprüche

1. Verfahren zur Herstellung von zellularen Polyurethan- und/oder Polyharnstofformkörpern nach dem RIM-Verfahren durch Umsetzung einer flüssigen Polyisocyanate enthaltenden Komponente mit einer Polyole und/oder Polyamine enthaltenden Komponente, welche reaktive Zusatzmittel, wie Kettenverlängerungs-, Vernetzungsmittel und/oder Wasser, und nichtreaktive Zusatzmittel, wie Katalysatoren, grenzflächenaktive Substanzen, Treibmittel, Füllstoffe und/oder weitere Additive enthalten kann, dadurch gekennzeichnet, daß man als grenzflächenaktive Substanzen Organopolysiloxane der allgemeinen durchschnittlichen Formel

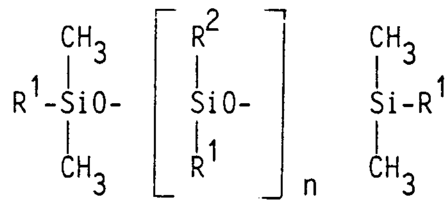

wobei

$R^1$ gleich oder verschieden sein kann und ein gegebenenfalls halogensubstituierter Alkylrest, ein Aryl-, Alkylaryl- oder ein Polyetherrest der allgemeinen durchschnittlichen Formel

$-(CH_2)_3O-(C_2H_4O-)_a(C_3H_6O-)_bR^3$

ist, wobei a einen durchschnittlichen Wert von 0 bis 15, b einen durchschnittlichen Wert von 1 bis 15 hat, und $R^3$ ein Wasserstoffrest oder ein Alkylrest mit 1 bis 4 Kohlenstoffatomen ist, mit der Maßgabe, daß mindestens n-1 Reste $R^1$ Methylreste sind,

$R^2$ ein Methyl- oder Trimethylsiloxyrest ist und

n, wenn $R^2$ ein Methylrest ist, einen Absolutwert von 3 bis 8, wenn $R^2$ ein Trimethylsiloxyrest ist, einen Absolutwert von 1 bis 4 hat,

mit der Maßgabe, daß das Polymerengemisch der Organosiloxane im wesentlichen frei von Siloxanen ist, bei denen die Werte von n über oder unterschritten werden.

**2.** Verfahren nach Anspruch 1, dadurch gekennzeichnet, daß man Polysiloxane verwendet, bei denen $R^1$ ein niederer gegebenenfalls halogensubstituierter niederer Alkylrest mit 1 bis 4 Kohlenstoffatomen, ein Phenyl- oder Isopropylphenylrest ist.

**3.** Verfahren nach Anspruch 1, dadurch gekennzeichnet, daß $R^1$ ein Methylrest ist.

## Claims

**1.** Process for the production of cellular polyurethane and/or polyurea mouldings by the RIM process by reacting a liquid polyisocyanate-containing component with a polyol- and/or polyamine-containing component, which may contain reactive additives, such as chain extenders, crosslinking agents and/or water, and unreactive additives, such as catalysts, surfactants, blowing agents, fillers and/or further additives, characterized in that the surfactants are organopolysiloxanes of the general average formula

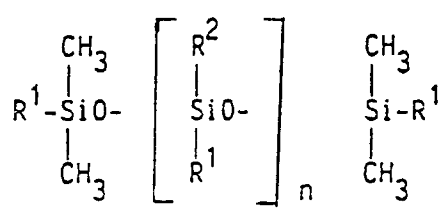

where

$R^1$ may be identical or different and is an optionally halogen-substituted alkyl radical, an aryl, alkylaryl or a polyether radical of the general average formula

$-(CH_2)_3O-(C_2H_4O-)_a(C_3H_6O-)_bR^3$

where a has an average value of from 0 to 15, b has an average value of from 1 to 15, and $R^3$ is a hydrogen radical or an alkyl radical having 1 to 4 carbon atoms, with the proviso that at least n-1 $R^1$ radicals are methyl radicals,

$R^2$ is a methyl or trimethylsiloxy radical, and

n has an absolute value of from 3 to 8 when $R^2$ is a methyl radical and an absolute value of

from 1 to 4 when $R^2$ is a trimethylsiloxy radical,

with the proviso that the polymer mixture of the organosiloxanes is essentially free from siloxanes in which n has a value above or below those given above.

**2.** Process according to Claim 1, characterized in that polysiloxanes are used in which $R^1$ is a lower, optionally halogen-substituted alkyl radical having 1 to 4 carbon atoms or is a phenyl or isopropyl phenyl radical.

**3.** Process according to Claim 1, characterized in that $R^1$ is a methyl radical.

**Revendications**

**1.** Procédé de préparation d'articles moulés cellulaires à base de polyuréthane et/ou de polyurée selon le procédé RIM, par réaction d'un composant liquide contenant des polyisocyanates avec un composant contenant des polyols et/ou des polyamines, qui peuvent contenir des additifs réactifs, comme des agents d'allongement de chaîne, des agents de réticulation et/ou de l'eau, et des additifs non réactifs, comme des catalyseurs, des substances tensio-actives, des agents moussants, des charges et/ou d'autres additifs, caractérisé en ce qu'on utilise, comme substances tensio-actives, des organopolysiloxanes répondant à la formule générale moyenne :

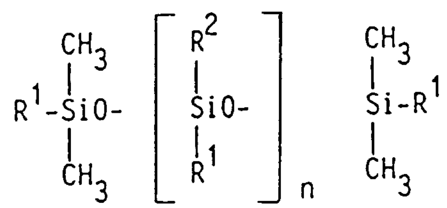

où

$R^1$ peuvent être identiques ou différents les uns des autres et signifient chacun un reste alkyle éventuellement substitué par un halogène, un reste aryle, alkylaryle ou un reste polyéther répondant à la formule générale moyenne:

$$-(CH_2)_3O-(C_2H_4O-)_a(C_3H_6O-)_bR^3$$

où "a" a une valeur moyenne de 0 à 15, "b" a une valeur moyenne de 1 à 15, et $R^3$ est un reste d'hydrogène ou un reste alkyle ayant de 1 à 4 atomes de carbone, à la condition qu'au moins n-1 restes $R^1$ soient des restes méthyle,

$R^2$ est un reste méthyle ou un reste triméthylsiloxy, et

n a une valeur absolue de 3 à 8 quand $R^2$ est un reste méthyle, et
a une valeur absolue de 1 à 4 quand $R^2$ est un reste triméthylsiloxy,

à la condition que le mélange de polymères des organosiloxanes soit essentiellement exempt de siloxanes dans lesquels les valeurs de n sont supérieures ou inférieures à celles qui sont indiquées ci-dessus.

**2.** Procédé selon la revendication 1, caractérisé en ce qu'on utilise des polysiloxanes dans lesquels $R^1$ est un reste alkyle inférieur, éventuellement substitué par un halogène, ayant de 1 à 4 atomes de carbone, ou un reste phényle ou isopropylphényle.

**3.** Procédé selon la revendication 1, caractérisé en ce que $R^1$ est un reste méthyle.